# EUROPEAN PATENT SPECIFICATION

(11) **EP 4 478 007 B1**
(45) Date of publication and mention of the grant of the patent: **29.07.2026**
(21) Application number: 23179116.1
(22) Date of filing: 14.06.2023
(51) Int. Cl.: G01F 23/284, G01F 23/80, G01S 13/88

(54) **RADAR LEVEL GAUGE SYSTEM AND METHOD FOR PRODUCT LEVEL ESTIMATION IN HIGH-LEVEL AND/OR LOW-LEVEL MEASUREMENT CONDITION**
RADARFÜLLSTANDSMESSSYSTEM UND VERFAHREN ZUR PRODUKTFÜLLSTANDSSCHÄTZUNG BEI EINEM HOCH- UND/ODER NIEDRIGPEGELMESSZUSTAND
SYSTÈME DE JAUGE DE NIVEAU RADAR ET PROCÉDÉ D'ESTIMATION DE NIVEAU DE PRODUIT DANS UNE CONDITION DE MESURE DE HAUT NIVEAU ET/OU DE BAS NIVEAU

(43) Date of publication of application: 18.12.2024
(73) Proprietor: Rosemount Tank Radar AB, 435 23 Mölnlycke (SE)
(72) Inventor: GRAHN, Marcus, 582 76 Linköping (SE)
(74) Representative: Kransell & Wennborg KB

(56) References cited:
- EP-A1- 1 804 038
- US-A1- 2005 285 777
- US-A1- 2012 056 774
- US-A1- 2013 231 877
- US-A1- 2019 128 727
- US-A1- 2022 178 730
- US-B1- 6 295 018
- US-B1- 6 445 192

## Description

### Technical Field of the Invention

The present invention relates to a radar level gauge system and to a method of estimating a level of a product in a tank.

### Technical Background

Radar level gauge systems are in wide use for measuring filling levels in tanks. Radar level gauging is generally performed either by means of noncontact measurement, whereby electromagnetic signals are radiated towards the product contained in the tank, or by means of contact measurement, often referred to as guided wave radar (GWR), whereby electromagnetic signals are guided towards and into the product by a probe. The probe is generally arranged at least approximately vertically in the tank. The electromagnetic signals are reflected at the surface of the product, and the reflected signals are received by a receiver or transceiver comprised in the radar level gauge system. Based on the transmitted and reflected signals, the distance to the surface of the product can be determined.

More particularly, the distance to the surface of the product is generally determined based on the time between transmission of an electromagnetic signal and receipt of the reflection thereof in the interface between the atmosphere in the tank and the product contained therein. In order to determine the actual filling level of the product, the distance from a reference position to the surface may be determined based on the above-mentioned time (the so-called time-of-flight) and the propagation velocity along the probe of the electromagnetic signals.

Most radar level gauge systems on the market today are either so-called pulsed radar level gauge systems that determine the distance to the surface of the product contained in the tank based on the difference in time between transmission of a pulse and reception of its reflection at the surface of the product, or systems that determine the distance to the surface based on the phase difference between a transmitted frequency-modulated signal and its reflection at the surface. The latter type of systems are generally referred to as being of the FMCW (Frequency Modulated Continuous Wave) type.

In any case, the propagated electromagnetic signal is typically not only reflected at the impedance transition constituted by the interface between atmosphere and surface, but at several other impedance transitions encountered by the signal. In the case of a GWR-system, one such impedance transition is typically caused by the connection between the transceiver and the probe. Generally, the transceiver is located outside the tank, and is connected to the probe via a feed-through going through a wall (typically the roof) of the tank.

Such a feed-through is typically formed by a coaxial line having the probe as its inner conductor, the tank wall or a connection piece that is attached to the tank as its outer conductor, and a dielectric member provided between the inner and outer conductors.

Due to the combined need for a sufficiently mechanically strong inner conductor and a practical outer conductor diameter, a feed-through impedance much above about 50Ω is seldom feasible. Hence, because of its structure, the impedance of the feed-through is generally similar to that of a typical coaxial cable, that is, about 50Ω.

Since the impedance of the probe is typically considerably higher (about 200-300Ω for a twin line probe and about 300-400Ω for a single line probe) there will be a relatively large impedance step where the feed-through ends and the probe enters the tank.

As explained above, this impedance transition partly reflects the transmitted electromagnetic signal, giving rise to an echo signal which may be substantially stronger than the surface echo signal resulting from reflection of the transmitted signal at the surface of the product in the tank, especially when the product to be gauged is a material that yields a relatively weak echo signal. Examples of products yielding relatively weak echo signals are liquid natural gas (LNG), liquid petroleum gas (LPG), oil-based products, and solids such as plastic pellets or grain etc.

This may in turn make it difficult to determine the filling level when the surface of the product is close to the feed-through. A similar situation may exist in the vicinity of the probe end, at the bottom of the tank or measurement chamber.

It would be desirable to provide an improved radar level gauge system and method allowing estimation of the level of the product in the tank in the vicinity of the feed-through and/or in the vicinity of the probe end.

US 2022/178730 A1 relates to a method of determining a level of a product in a tank, comprising generating and transmitting an electromagnetic transmit signal; guiding the transmit signal towards and into the product; returning an electromagnetic reflection signal resulting from reflection of the transmit signal; receiving, the reflection signal; determining, based on the reflection signal and a timing relation between the reflection signal and the transmit signal, an echo signal exhibiting an echo signal strength as a function of a propagation parameter indicative of position along the probe; and determining the level of the surface of the product based on a propagation parameter value indicative of a first threshold position along the probe for which the echo signal has reached a predetermined threshold signal strength, and an offset indicative of an offset distance along the probe from the first threshold position towards the second probe end.

US 2005/285777 A1 relates to a method for processing a time domain reflectometry (TDR) signal used to determine at least one process variable for a material in a tank, wherein said TDR signal has been generated by a radar level gauge system comprising a pulse generator, a probe extending into the tank for guiding the pulse, and a receiver for receiving said TDR signal, and wherein the TDR signal comprises at least a surface reflection pulse caused by an interface between different materials in the tank, and an interfering pulse caused by a transition between the pulse generator and the probe. The method comprises obtaining a first sampled TDR signal with an amplification such that the interfering pulse is unsaturated, determining a compensation pulse signal using a previously stored pulse shape and a current pulse position, subtracting said compensation pulse signal from the first sampled TDR signal, determining if a surface reflection occurs in a zone where said interfering pulse has a significant interfering effect on any surface reflection pulse occurring in this zone, and, if no surface reflection occurs in this zone, updating the current pulse position.

EP 1 804 038 A1 relates to a level measurement device to measure the fill level of a fluid in a container. More particularly, the invention also relates to a method to determine the contents level of a first fluid in a container and the presence of a second fluid below the first fluid. In order to achieve this object, microwave signals generated in the level measurement device are guided on a waveguide that is immersed in the liquid. The measurement curve from received measurement signals is scanned for a first signal peak indicating the first fluid surface. The measurement curve is also scanned for a potential second signal peak having the same polarity as the first signal peak and thus indicating an interface between the first and a second fluid.

US 2012/056774 A1 relates to a method of monitoring operation of a radar level gauge system installed at a tank and arranged to determine a filling level of a product contained in the tank. The method comprises the steps of: providing a first propagation property discontinuity at a first distance from a reference position at a top of the tank; generating and transmitting an electromagnetic signal; propagating the transmitted electromagnetic signal towards the product contained in the tank; receiving a reflected electromagnetic signal comprising a plurality of echoes resulting from reflections at propagation property discontinuities encountered by the transmitted electromagnetic signal, including a first reference echo resulting from reflection at the first propagation property discontinuity and a surface echo resulting from reflection at a surface of the product contained in the tank; identifying the surface echo; determining the filling level based on the surface echo; evaluating a first portion of the reflected electromagnetic signal exhibiting a time-of-flight corresponding to the first distance from the reference position; determining, based on the evaluation, whether or not the first reference echo is detectable in the first portion of the reflected electromagnetic signal. If it is determined that the first reference echo is detectable in the first portion of the reflected electromagnetic signal, a first signal indicative of the filling level is provided; and if it is determined that the first reference echo is non-detectable in the first portion of the reflected electromagnetic signal, a second signal different from the first signal is provided.

### Summary of the Invention

**In** view of the above, it would be desirable to provide an improved radar level gauge system and method allowing estimation of the level of the product in the tank in the vicinity of the feed-through and/or in the vicinity of the probe end.

According to a first aspect of the present invention, it is therefore provided a method of estimating a level of a product in a tank, using a radar level gauge system comprising a transceiver arranged on an outside of the tank; a probe arranged on an inside of the tank to extend substantially vertically towards a surface of the product and into the product to a probe end, the probe having a probe impedance; a feed-through connecting the transceiver and the probe, the feed-through having a feed-through impedance; and processing circuitry arranged on the outside of the tank and coupled to the transceiver, the method comprising: transmitting, by the transceiver, an electromagnetic transmit signal through the feed-through to the probe; guiding, by the probe, the transmit signal towards and into the product in the tank; receiving, by the transceiver, an electromagnetic reflection signal resulting from reflection of the transmit signal at impedance transitions encountered thereby; determining, by the processing circuitry, based on a timing relation between the reflection signal and the transmit signal, an echo representation of echo signal strength as a function of a propagation parameter indicative of distance from the transceiver, the echo representation including a fiducial echo local extremum indicating reflection of the transmit signal at an impedance transition from the feed-through impedance to the probe impedance; and estimating, by the processing circuitry, when the echo representation has a local extremum of the same type as the fiducial echo local extremum within a predefined first distance from a position of the fiducial echo local extremum towards the probe end, the level of the surface based on a propagation parameter for the local extremum within the first distance from the fiducial echo local extremum; and/or estimating, by the processing circuitry, when the echo representation includes a probe end echo local extremum indicating reflection of the transmit signal at the probe end and the echo representation has a local extremum of the same type as the probe end echo local extremum within a predefined second distance from a position of the probe end echo local extremum towards the transceiver, the level of the surface based on a propagation parameter for the local extremum within the second distance from the probe end echo local extremum.

A local extremum can be a local minimum or a local maximum. If a local extremum is a local minimum, "a local extremum of the same type" is thus also a local minimum. Analogously, if a local extremum is a local maximum, "a local extremum of the same type" is thus also a local maximum.

The first distance from the position of the fiducial echo local extremum may be a distance substantially corresponding to an upper boundary of a normal operating range of the radar level gauge system. Analogously, the second distance from the position of the probe end echo local extremum may be a distance substantially corresponding to an lower boundary of the normal operating range of the radar level gauge system. The first distance and the second distance may differ depending on the particular radar level gauge system configuration, and may be 500 mm or less, such as 300 mm or less.

When the surface of the product approaches the feed-through, the surface echo appears to disappear due to superposition with the, typically considerably stronger, fiducial echo. The same situation may occur when the surface of the product approaches the probe end. The present invention is based upon the realization that the above-mentioned superposition of the fiducial echo and the surface echo also results in formation in the echo representation of a local extremum of the same type as the fiducial echo local extremum when the surface approaches the feed-through, and that superposition of the probe end echo and the surface echo also may result in formation in the echo representation of a local extremum of the same type as the probe echo local extremum when the surface approaches the probe end. Hereby, the level of the surface of the product can be estimated even when the surface echo appears to disappear due to the above-mentioned superposition with the fiducial echo. This may provide for output of more reliable information from the radar level gauge system, and may also provide for improved process control and/or safety.

According to various examples, the method may comprise providing, by the processing circuitry, when the level of the surface has been estimated based on the propagation parameter for the local extremum within the first distance from the fiducial echo local extremum, a first signal indicating that the level of the surface is within the first distance; and/or providing, by the processing circuitry, when the level of the surface has been estimated based on the propagation parameter for the local extremum within the second distance from the probe end echo local extremum, a second signal indicating that the level of the surface is within the second distance.

The first signal may encode an estimation of the level of the surface when the surface is within the first distance; and the second signal may encode an estimation of the level of the surface when the surface is within the second distance. Although the estimation of the level encoded by the first and/or second signals may not be as accurate as an estimation of the level in the normal measurement range, even an approximate level indication may be very useful when the level is close to the ceiling (or bottom) of the tank. As an alternative, or complement, the first and/or second signal may include an alert or alarm.

According to various examples, the fiducial echo local extremum may indicate a first maximum received energy from reflection of the transmit signal at the impedance transition from the feed-through impedance to the probe impedance when the echo representation lacks a local extremum of the same type as the fiducial echo local extremum within the first distance, and the probe end local extremum indicates a second maximum received energy from reflection of the transmit signal at the probe end when the echo representation lacks a local extremum of the same type as the probe end echo local extremum within the second distance; and the method may comprise estimating, by the processing circuitry, only when the echo representation has a local extremum of the same type as the fiducial echo local extremum within the first distance and the fiducial echo local extremum indicates a received energy being lower than the first maximum received energy, the level of the surface based on the propagation parameter for the local extremum within the first distance from the fiducial echo local extremum; and/or estimating, by the processing circuitry, only when the echo representation has a local extremum of the same type as the probe end echo local extremum within the second distance and the probe end echo local extremum indicates a received energy being lower than the second maximum received energy, the level of the surface based on the propagation parameter for the local extremum within the second distance from the probe end echo local extremum. The finding that the absolute value of the amplitude of the fiducial echo has decreased, in addition to the presence of a local extremum of the same type in the vicinity of the fiducial echo, increases the likelihood that the surface of the product is indeed close to the feed-through, such as in a zone sometimes referred to as "upper dead-zone". The same applies to the probe end echo by analogy.

In various examples, furthermore, the method may comprise estimating, by the processing circuitry, when an echo local extremum in the echo representation fulfills a predefined surface echo identification criterion including a minimum echo amplitude, the level of the surface based on a propagation parameter for the echo local extremum. This would correspond to normal operation, when the surface of the product is within a normal operating range, and not in the upper dead-zone of lower dead-zone or similar.

The transmit signal may comprise a first pulse train having a first pulse repetition frequency; and the method may further comprise the steps of: generating, by the transceiver, an electromagnetic reference signal in the form of a second pulse train having a second pulse repetition frequency controlled to differ from the first pulse repetition frequency by a frequency difference; and the echo signal may be determined based on the reflection signal, the reference signal, and the frequency difference.

The pulses in the first pulse train may be so-called DC-pulses.

**It** should be noted that the steps of methods according to embodiments of the present invention need not necessarily be carried out in any particular order, unless explicitly or implicitly required.

According to a second aspect of the present invention, it is provided a radar level gauge system for estimating a level of a product in a tank, the radar level gauge system comprising: a transceiver arranged on an outside of the tank, the transceiver being configured to generate, transmit and receive electromagnetic signals; a probe having a probe impedance, arranged on an inside of the tank to extend substantially vertically towards a surface of the product and into the product to a probe end, the probe being configured to guide an electromagnetic transmit signal from the transceiver towards and into the product, and to guide an electromagnetic reflection signal resulting from reflection of the transmit signal at impedance transitions encountered thereby back towards the transceiver; a feed-through connecting the transceiver and the probe, the feed-through having a feed-through impedance; and processing circuitry arranged on the outside of the tank and coupled to the transceiver, the processing circuitry being configured to: determine, based on a timing relation between the reflection signal and the transmit signal, an echo representation of echo signal strength as a function of a propagation parameter indicative of distance from the transceiver, the echo representation including a fiducial echo local extremum indicating reflection of the transmit signal at an impedance transition from the feed-through impedance to the probe impedance; and estimate, when the echo representation has a local extremum of the same type as the fiducial echo local extremum within a predefined first distance from a position of the fiducial echo local extremum towards the probe end, the level of the surface based on a propagation parameter for the local extremum within the first distance from the fiducial echo local extremum; and/or estimate, when the echo representation includes a probe end echo local extremum indicating reflection of the transmit signal at the probe end and the echo representation has a local extremum of the same type as the probe end echo local extremum within a predefined second distance from a position of the probe end echo local extremum towards the transceiver, the level of the surface based on a propagation parameter for the local extremum within the second distance from the probe end echo local extremum.

According to various embodiments, the transceiver may comprise: transmission signal generating circuitry for generating the transmit signal in the form of a first pulse train having a first pulse repetition frequency; and reference signal generating circuitry for generating an electromagnetic reference signal in the form of a second pulse train having a second pulse repetition frequency controlled to differ from the first pulse repetition frequency by a frequency difference; and the echo signal forming circuitry may be configured to form the echo signal based on the reflection signal, the reference signal, and the frequency difference.

Further embodiments of, and effects obtained through this second aspect of the present invention are largely analogous to those described above for the first aspect of the invention.

In summary, the present invention thus relates to a method of estimating a level of a product in a tank by transmitting an electromagnetic transmit signal through a feed-through to a probe; guiding the transmit signal towards and into the product in the tank; receiving, an electromagnetic reflection signal resulting from reflection of the transmit signal; determining an echo representation including a fiducial echo local extremum; and estimating, in the case of a local extremum of the same type as the fiducial echo local extremum within a predefined first distance from a position of the fiducial echo local extremum towards the probe end, the level of the surface based on a propagation parameter for the local extremum within the first distance from the fiducial echo local extremum.

### Brief Description of the Drawings

These and other aspects of the present invention will now be described in more detail, with reference to the appended drawings showing example embodiments of the invention, wherein:
Fig 1 schematically illustrates an exemplary tank arrangement comprising a radar level gauge system according to an embodiment of the present invention;
Fig 2 is a schematic illustration of the measurement unit comprised in the radar level gauge system in fig 1;
Fig 3 is a schematic block diagram of the transceiver comprised in a radar level gauge system according to an embodiment of the present invention;
Fig 4 is a flow-chart schematically illustrating an example of the method according to the present invention;
Fig 5 is a schematic illustration of an example of an echo representation when the level of the product is in a normal measurement range;
Fig 6A is a schematic illustration of an example of an echo representation when the level of the product is in a high-level measurement range; and
Fig 6B is a schematic illustration of an enlarged portion of the echo representation in fig 6A.

### Detailed Description of an Example Embodiment of the Invention

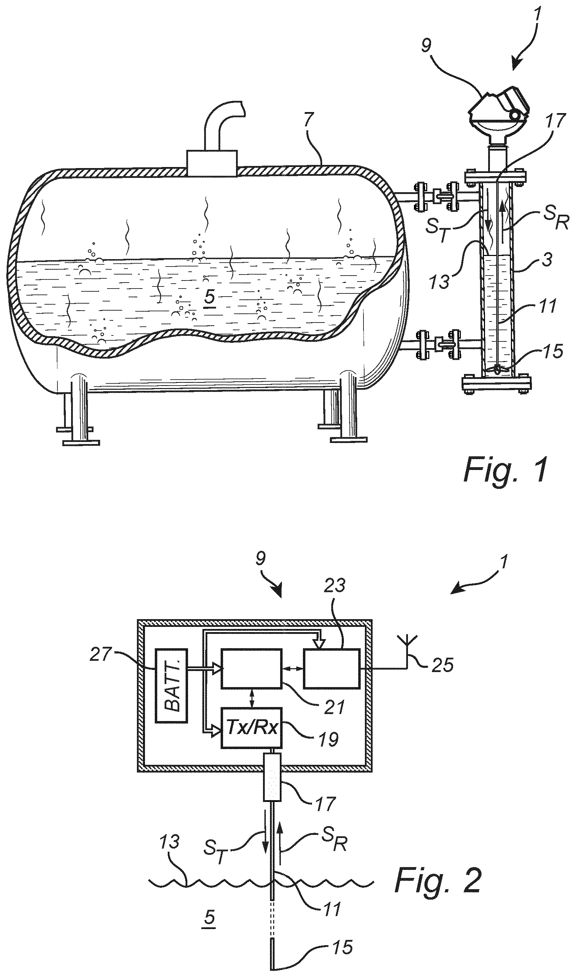

Fig 1 schematically shows a radar level gauge system 1 according to an example of the present invention mounted on a measurement chamber 3 for gauging the level of product 5 in a tank 7. The radar level gauge system 1, which is of the GWR (Guided Wave Radar) type, comprises a measuring electronics unit 9 arranged outside the tank 7, and a transmission line probe 11 arranged inside the tank 7 (in this particular example, the probe 11 is arranged inside the chamber 3, which is considered to be a part of the tank 7). As is schematically shown in fig 1, the probe 11 extends towards a surface 13 of the product 5, and into the product 5 to a probe end 15. Additionally, the radar level gauge system 1 comprises a feed-through 17 where the probe 11 passes from an outside of the tank 7 to an inside of the tank 7. When the radar level gauge system 1 is in operation, the probe guides an electromagnetic transmit signal S_{T} towards and into the product 5 and an electromagnetic reflection signal S_{R} resulting from reflection of the transmit signal S_{T} at impedance transitions/discontinuities encountered by the transmit signal S_{T}. The exemplary radar level gauge system in fig 1 will now be described in more detail with reference to the schematic block diagram in fig 2.

Referring to the schematic block diagram in fig 2, the measurement unit 9 of the radar level gauge system 1 in fig 1 comprises a transceiver 19 and processing circuitry 21. Additionally, the block diagram in fig 2 depicts the following optional functional part: a wireless communication control unit (WCU) 23, a communication antenna 25, and an energy store, such as a battery 27. As was explained in some detail in the Background section, the probe 11 has a probe impedance, and the feed-through 17 has a feed-through impedance, that may differ significantly from the probe impedance.

As is schematically illustrated in fig 2, the processing circuitry 21 may control the transceiver 19 to generate, transmit and receive electromagnetic signals. The transmitted signals pass through the feed-through 17 to the probe 11, and the received signals pass from the probe 11 through the feed-through 17 to the transceiver 19.

The processing circuitry 21 may may be configured to determine the level of the product 5 and provide a value indicative of the level to an external device, such as a processing unit of a control center, via the WCU 23 through the communication antenna 25. The radar level gauge system 1 may advantageously be configured according to the so-called WirelessHART communication protocol (IEC 62591).

Although the measurement unit 9 is shown to comprise an energy store 27 and to comprise devices (such as the WCU 23 and the communication antenna 25) for allowing wireless communication, it should be understood that power supply and communication may be provided in a different way, such as through communication lines (for example 4-20 mA lines).

The local energy store need not (only) comprise a battery, but may alternatively, or in combination, comprise a capacitor or super-capacitor.

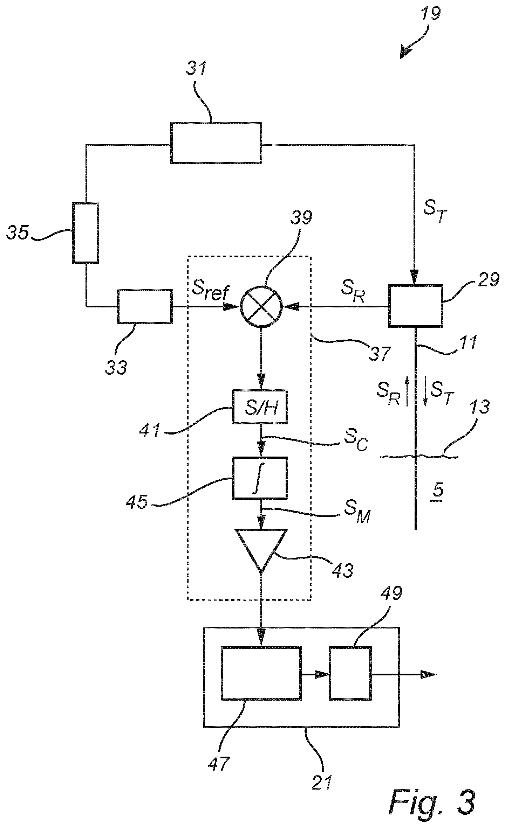

The radar level gauge system 1 in fig 1 and fig 2 will now be described in greater detail with reference to the schematic block diagram in fig 3. Referring now to fig 3, there is shown a more detailed block diagram of an example transceiver 19 that may be comprised in the radar level gauge system in fig 2.

As is schematically shown in fig 3, the example transceiver 19 may comprise a transmitter branch for generating and transmitting the transmit signal S_{T}, and a receiver branch for receiving and operating on the reflection signal S_{R}. As is indicated in fig 3, the transmitter branch and the receiver branch are both connected to a directional coupler 29 to direct signals from the transmitter branch to the probe 11 and to direct reflected signals being returned by the probe 11 to the receiver branch.

As is schematically indicated in fig 3, the example transceiver 19 comprises pulse generating circuitry, here in the form of a first pulse forming circuit 31, a second pulse forming circuit 33, and a timing control unit 35 for controlling the timing relationship between the transmit signal output by the first pulse forming circuit 31 and the frequency shifted reference signal S_{REF} output by the second pulse forming circuit 33.

The transmitter branch comprises the first pulse forming circuit 31, and the receiver branch comprises the second pulse forming circuit 33 and measurement circuitry 37.

As is schematically indicated in fig 3, the measurement circuitry 37 comprises a time-correlator, here in the form of a mixer 39, a sample-and-hold circuit 41 and amplifier circuitry 43. In examples, the measurement circuitry 37 may further comprise an integrator 45.

Additionally, as was briefly described above with reference to fig 2, the radar level gauge system 1 comprises processing circuitry 21 that is connected to the measurement circuitry 37 for determining the level of the surface 13 of the product 5.

When the radar level gauge system 1 in fig 3 is in operation to perform a filling level determination, a time correlation is performed in the mixer 39 between the reflection signal S_{R} and the reference signal S_{REF} that is output by the second pulse forming circuit 33. The reference signal S_{REF} is a pulse train with a pulse repetition frequency that controlled to differ from the pulse repetition frequency of the transmit signal S_{T}, by a predetermined frequency difference Δf. When a measurement sweep starts, the reference signal S_{REF} and the transmit signal S_{T} are in phase, and then parameter values indicative of a time correlation between the reference signal and the reflected signal S_{R} are determined to form an echo representation, together with the frequency difference Δf. Based on an analysis of the echo representation, the level of the surface 13 of the product 5 can be determined, as will be described further below.

The time-expansion technique that was briefly described in the previous paragraph is well known to the person skilled in the art, and is widely used in pulsed radar level gauge systems.

As is clear from the above discussion, the output from the mixer 39 will be a sequence of values, where each value represents a time correlation between a pulse of the reference signal S_{REF} and the reflection signal S_{R}. The values in this sequence of values may be tied together to form a continuous signal using a sample-and-hold circuit 41.

In this context it should be noted that the sample-and-hold circuit 41 is simply an illustrative example of a device capable of maintaining a voltage level over a given time, and that there are various other devices that can provide the desired functionality, as is well known to the person skilled in the art.

In the example embodiment of fig 3, the time-correlated signal - the correlation signal S_{C} - output from the sample-and-hold circuit 41 is provided to the integrator 45 to form a measurement signal S_{M}, which is amplified by the low noise amplifier LNA 43. The above-mentioned echo signal can be formed, by echo signal forming circuitry 47, based on the measurement signal S_{M} and the frequency difference Δf. The filling level can, according to examples of the present invention, be determined by the level determining circuity 49.

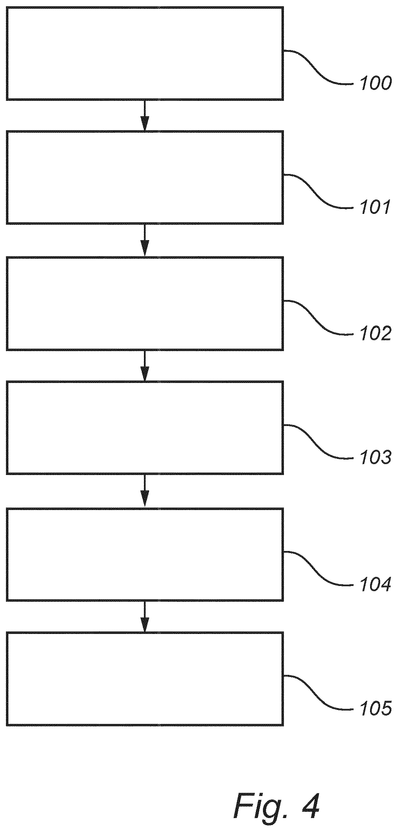

An example of the method according to the invention will now be described with reference to the schematic flow-chart in fig 4, with further reference to fig 2, and to other figures as indicated. The method comprises transmitting 100, by the transceiver 19, an electromagnetic transmit signal S_{T} through the feed-through 17 to the probe 11. The transmit signal S_{T} may be a pulse train of transmit pulses. The transmit signal S_{T} is guided 101, by the probe 11, towards and into the product 5 in the tank 7. An electromagnetic reflection signal S_{R} resulting from reflection of the transmit signal S_{T} at impedance transitions encountered thereby is received 102 by the transceiver 19.

An echo representation is determined 103, by the processing circuitry 21, based on a timing relation between the reflection signal S_{R} and the transmit signal S_{T}. The echo representation is a representation of echo signal strength as a function of a propagation parameter indicative of electrical distance from the transceiver 19, through the feed-through 17 and along the probe 11.

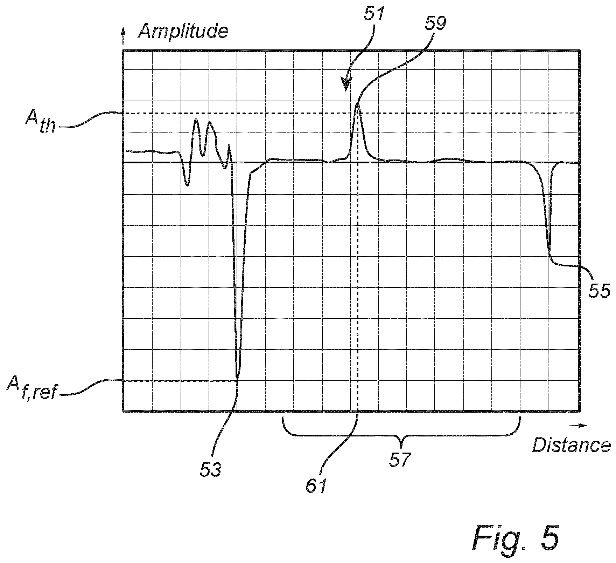

In order to illustrate a normal measurement condition, when the level of the product 5 is within a normal measurement range, fig 5 is a schematic illustration of an example of an echo representation 51 of echo amplitude as a function of distance from the transceiver 19. The echo representation in fig 5 includes a fiducial echo local extremum 53 (a local minimum) indicating reflection of the transmit signal S_{T} at an impedance transition from a feed-through impedance of the feed-through 17 to a probe impedance of the probe 11. Under this normal measurement condition, the fiducial pulse 53 has a reference fiducial amplitude A_{f,ref}. The example echo representation 51 in fig 5 also includes a probe end echo local extremum 55 indicating reflection of the transmit signal S_{T} at the probe end 15.

As mentioned, fig 5 is a schematic illustration of an example of an echo representation 51 when the level of the product is in a normal measurement range 57. Therefore, the processing circuitry 21 can estimate the level of the surface 13 using the *per se* known technique of searching for an echo local extremum 59 that fulfills a predefined surface echo identification criterion, including a minimum echo amplitude Aₜₕ. The distance to the surface 13 of the product 5 can then be estimated based on the position 61 of that echo local extremum 59.

When the surface 13 approaches the feed-through 17, the reflection from the surface 13 is superimposed with the reflection from the impedance transition from the feed-through impedance of the feed-through 17 to the probe impedance of the probe 11. Since the amplitude of the fiducial echo 53 is typically substantially higher than the amplitude of the surface echo 59, this superposition will result in the amplitude of the surface echo 59 first failing to fulfill the surface echo identification criterion (not reaching the minimum echo amplitude Aₜₕ) and eventually not being recognizable as a "positive" pulse at all.

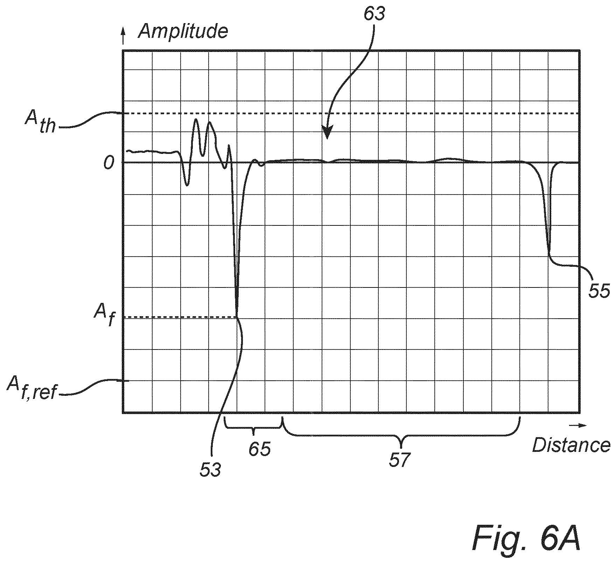

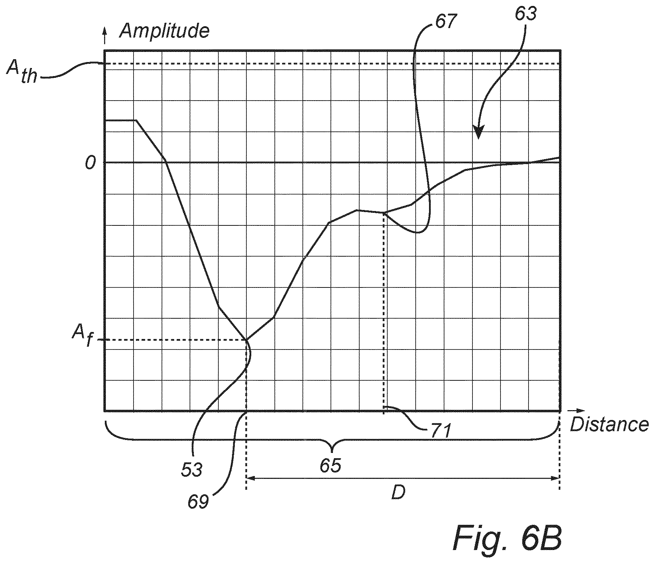

An example of such a situation is schematically shown in figs 6A-B, where 6A is a schematic illustration of an example of an echo representation 63 when the level of the product 5 is higher than the normal measurement range 57, and fig 6B is an enlarged portion 65 of the echo representation 63 in fig 6A.

As is clear from a comparison between the echo representation 63 in fig 6A, corresponding to a high-level measurement condition, and the echo representation 51 in fig 5, corresponding to a normal measurement condition, the amplitude A_{f} of the fiducial pulse 53 has been somewhat reduced in the echo representation 63 corresponding to the high-level measurement condition, and the surface echo 59 appears to have disappeared.

**It** would be desirable to be able to determine, with a relatively high degree of confidence, whether or not the surface 13 of the product 5 is close to the feed-through 17, and thus also potentially close to the ceiling of the tank 7. **It** would also be desirable to be able to determine, with a relatively high degree of confidence, whether or not the surface 13 of the product 5 is close to the probe end 15, and thus also potentially close to the bottom of the tank 7.

Returning to the flow-chart in fig 4, and additionally referring to fig 6B, the method comprises estimating 104, by the processing circuitry 21, when the echo representation 63 has a local extremum 67 of the same type (in this case a local minimum) as the fiducial echo local extremum 53 within a predefined first distance D from a position 69 of the fiducial echo local extremum 53 towards the probe end 15, the level of the surface 13 of the product 5 based on a propagation parameter 71 for the local extremum 67 within the first distance D from the fiducial echo local extremum 53.

After having estimated the level of the surface 13, the method may optionally comprise the step of providing 105, by the processing circuitry 21, when the level of the surface 13 has been estimated based on the propagation parameter 71 for the local extremum 67 within the first distance D from the fiducial echo local extremum 53, a first signal indicating that the level of the surface 13 is within the first distance D. The first signal may encode an estimation of the level of the surface 13 when the surface 13 is within the first distance D.

For improved reliability of the estimation of the level, the estimation based on the propagation parameter 71 for the local extremum 67 within the first distance D from the fiducial echo local extremum 53 may be carried out only when the fiducial echo local extremum 53 indicates a received energy, for example indicated by the amplitude A_{f} of the fiducial pulse 53, being lower than the maximum received energy, for example indicated by the reference amplitude A_{f,ref} in the normal measurement condition.

Optionally, when the echo representation includes a probe end echo local extremum 55 indicating reflection of the transmit signal S_{T} at the probe end 15 and the echo representation has a local extremum of the same type (in this case a local minimum) as the probe end echo local extremum 55 within a predefined second distance from a position of the probe end echo local extremum 55 towards the transceiver 19, the level of the surface 13 of the product 5 may be estimated based on a propagation parameter for the local extremum within the second distance from the probe end echo local extremum 55. This low-level measurement condition is not explicitly shown in the figures, because it is analogous to the high-level measurement condition described with reference to figs 6A-B, and therefore easy for the skilled person to understand based on this description.

Also in this case, after having estimated the level of the surface 13, the method may optionally comprise the step of providing, by the processing circuitry 21, when the level of the surface 13 has been estimated based on the propagation parameter 71 for the local extremum within the second distance from the probe end echo local extremum, a second signal indicating that the level of the surface 13 is within the second distance. The second signal may encode an estimation of the level of the surface 13 when the surface 13 is within the second distance.

For improved reliability of the estimation of the level in the other optional case of the low-level measurement condition, the estimation based on the propagation parameter for the local extremum within the second distance from the probe end local extremum 55 may be carried out only when the probe end echo local extremum indicates a received energy being lower than the maximum received energy from reflection at the probe end 55 in the normal measurement condition.

The person skilled in the art realizes that the present invention by no means is limited to the examples described above. For example, other probe configurations than a single line transmission line probe may be used, such as a dual line transmission line probe or a coaxial probe.

The "transceiver" may be one functional unit capable of transmitting and receiving electromagnetic signals, or may be a system comprising separate transmitter and receiver units.

The tank may be any container or vessel capable of containing a product, and may be metallic, or partly or completely non-metallic, open, semi-open, or closed.

The probe should be understood to be a waveguide designed for guiding electromagnetic signals. The probe may be rigid or flexible and may advantageously be made of metal, such as stainless steel.

The propagation parameter may be any parameter indicative of a position along the probe.

## Claims

1. A method of estimating a level of a product (5) in a tank (7), using a radar level gauge system (1) comprising a transceiver (19) arranged on an outside of the tank (7); a probe (11) arranged on an inside of the tank (7) to extend substantially vertically towards a surface (13) of the product (7) and into the product (7) to a probe end (15), the probe (11) having a probe impedance; a feed-through (17) connecting the transceiver (19) and the probe (11), the feed-through (17) having a feed-through impedance; and processing circuitry (21) arranged on the outside of the tank (7) and coupled to the transceiver (19), the method comprising:
transmitting (100), by the transceiver (19), an electromagnetic transmit signal (S_{T}) through the feed-through (17) to the probe (11);
guiding (101), by the probe (11), the transmit signal (ST) towards and into the product (5) in the tank (7);
receiving (102), by the transceiver (19), an electromagnetic reflection signal (S_{R}) resulting from reflection of the transmit signal (S_{T}) at impedance transitions encountered thereby; and
determining (103), by the processing circuitry (21), based on a timing relation between the reflection signal (S_{R}) and the transmit signal (S_{T}), an echo representation (51; 63) of echo signal strength as a function of a propagation parameter indicative of distance from the transceiver, the echo representation (51; 63) including a fiducial echo local extremum (53) indicating reflection of the transmit signal (S_{T}) at an impedance transition from the feed-through impedance to the probe impedance, the method being **characterized by**:
estimating (104), by the processing circuitry (21), when the echo representation (63) has a local extremum (67) of the same type as the fiducial echo local extremum (53) within a predefined first distance (D) from a position (69) of the fiducial echo local extremum (53) towards the probe end (15), the level of the surface (13) based on a propagation parameter (71) for the local extremum (67) within the first distance (D) from the fiducial echo local extremum (53); and/or
estimating (104), by the processing circuitry (21), when the echo representation (63) includes a probe end echo local extremum (55) indicating reflection of the transmit signal (S_{T}) at the probe end (15) and the echo representation (63) has a local extremum of the same type as the probe end echo local extremum (55) within a predefined second distance from a position of the probe end echo local extremum (55) towards the transceiver (19), the level of the surface (13) based on a propagation parameter for the local extremum within the second distance from the probe end echo local extremum (55).

2. The method according to claim 1, wherein the method comprises:
providing (105), by the processing circuitry (21), when the level of the surface (13) has been estimated based on the propagation parameter (71) for the local extremum (67) within the first distance (D) from the fiducial echo local extremum (53), a first signal indicating that the level of the surface (13) is within the first distance (D); and/or
providing (105), by the processing circuitry (21), when the level of the surface (13) has been estimated based on the propagation parameter for the local extremum within the second distance from the probe end echo local extremum (55), a second signal indicating that the level of the surface (13) is within the second distance.

3. The method according to claim 2, wherein:
the first signal encodes an estimation of the level of the surface when the surface is within the first distance; and
the second signal encodes an estimation of the level of the surface when the surface is within the second distance.

4. The method according to any one of the preceding claims,
wherein the fiducial echo local extremum (53) indicates a first maximum received energy when the echo representation lacks a local extremum of the same type as the fiducial echo local extremum within the first distance, and the probe end local extremum (55) indicates a second maximum received energy when the echo representation lacks a local extremum of the same type as the probe end echo local extremum (55) within the second distance; and
wherein the method comprises:
estimating, by the processing circuitry (21), only when the echo representation has a local extremum (67) of the same type as the fiducial echo local extremum (53) within the first distance (D) and the fiducial echo local extremum (63) indicates a received energy being lower than the first maximum received energy, the level of the surface (13) based on the propagation parameter (71) for the local extremum (67) within the first distance (D) from the fiducial echo local extremum (53); and/or
estimating, by the processing circuitry (21), only when the echo representation (63) has a local extremum of the same type as the probe end echo local extremum (55) within the second distance and the probe end echo local extremum (55) indicates a received energy being lower than the second maximum received energy, the level of the surface (13) based on the propagation parameter for the local extremum within the second distance from the probe end echo local extremum (55).

5. The method according to any one of the preceding claims, wherein the method comprises:
estimating, by the processing circuitry (21), when an echo local extremum in the echo representation (63) fulfills a predefined surface echo identification criterion including a minimum echo amplitude, the level of the surface based on a propagation parameter for the echo local extremum.

6. The method according to any one of the preceding claims, wherein:
the first distance (D) is less than 500 mm; and
the second distance is less than 500 mm.

7. A radar level gauge system (1) for estimating a level of a product (5) in a tank (7), the radar level gauge system (1) comprising:
a transceiver (19) arranged on an outside of the tank (7), the transceiver (19) being configured to generate, transmit and receive electromagnetic signals;
a probe (11) having a probe impedance, arranged on an inside of the tank (7) to extend towards a surface (13) of the product (5) and into the product (5) to a probe end (15), the probe (11) being configured to guide an electromagnetic transmit signal (S_{T}) from the transceiver (19) towards and into the product (5), and to guide an electromagnetic reflection signal (S_{R}) resulting from reflection of the transmit signal (S_{T}) at impedance transitions encountered thereby back towards the transceiver (19);
a feed-through (17) connecting the transceiver (19) and the probe (11), the feed-through (17) having a feed-through impedance; and
processing circuitry (21) arranged on the outside of the tank (7) and coupled to the transceiver (19), the processing circuitry (21) being configured to determine, based on a timing relation between the reflection signal (S_{R}) and the transmit signal (S_{T}), an echo representation (51; 63) of echo signal strength as a function of a propagation parameter indicative of distance from the transceiver (19), the echo representation (51; 63) including a fiducial echo local extremum (53) indicating reflection of the transmit signal (S_{T}) at an impedance transition from the feed-through impedance to the probe impedance, **characterized in that** the processing circuitry (21) is further configured to:
estimate, when the echo representation (63) has a local extremum (67) of the same type as the fiducial echo local extremum (53) within a predefined first distance (D) from a position (69) of the fiducial echo local extremum (53) towards the probe end (15), the level of the surface (13) based on a propagation parameter (71) for the local extremum (67) within the first distance (D) from the fiducial echo local extremum (53); and/or
estimate, when the echo representation (63) includes a probe end echo local extremum (55) indicating reflection of the transmit signal (S_{T}) at the probe end (15) and the echo representation (63) has a local extremum of the same type as the probe end echo local extremum (55) within a predefined second distance from a position of the probe end echo local extremum towards the transceiver (19), the level of the surface based on a propagation parameter for the local extremum within the second distance from the probe end echo local extremum (55).

8. The radar level gauge system (1) according to claim 7, wherein the processing circuitry (21) is configured to:
provide, when the level of the surface has been estimated based on the propagation parameter (71) for the local extremum (67) within the first distance from the fiducial echo local extremum (53), a first signal indicating that the level of the surface (13) is within the first distance (D); and/or
provide, when the level of the surface has been estimated based on the propagation parameter for the local extremum within the second distance from the probe end echo local extremum, a second signal indicating that the level of the surface is within the second distance.

9. The radar level gauge system (1) according to claim 7 or 8, wherein the processing circuitry (21) is configured to:
form the first signal in such a way that the first signal encodes the level of the surface when the surface is within the first distance; and
form the second signal in such a way that the second signal encodes the level of the surface when the surface is within the second distance.

10. The radar level gauge system (1) according to any one of claims 7 to 9,
wherein the fiducial echo local extremum (53) indicates a first maximum received energy when the echo representation lacks a local extremum of the same type as the fiducial echo local extremum within the first distance, and the probe end local extremum (55) indicates a second maximum received energy when the echo representation lacks a local extremum of the same type as the probe end echo local extremum within the second distance; and
wherein the processing circuitry (21) is configured to:
estimate, only when the echo representation (63) has a local extremum of the same type as the fiducial echo local extremum within the first distance and the fiducial echo local extremum indicates a received energy being lower than the first maximum received energy, the level of the surface based on the propagation parameter for the local extremum within the first distance from the fiducial echo local extremum; and/or
estimate, only when the echo representation (63) has a local extremum of the same type as the probe end echo local extremum within the second distance and the probe end echo local extremum indicates a received energy being lower than the second maximum received energy, the level of the surface based on the propagation parameter for the local extremum within the second distance from the probe end echo local extremum.

11. The radar level gauge system (1) according to any one of' claims 7 to 10, wherein the processing circuitry (21) is configured to:
estimate, when an echo local extremum in the echo representation fulfills a predefined surface echo identification criterion including a minimum echo amplitude, the level of the surface based on a propagation parameter for the echo local extremum.

12. The radar level gauge system (1) according to any one of' claims 7 to 11, wherein:
the first distance is less than 500 mm; and
the second distance is less than 500 mm.

13. The radar level gauge system (1) according to any one of claims 7 to 12, wherein the probe is a single conductor probe.

## Patentansprüche

1. Verfahren zum Schätzen eines Füllstands eines Produkts (5) in einem Tank (7) unter Verwendung eines Radarfüllstandsanzeigesystems (1), das einen Sendeempfänger (19), der an einer Außenseite des Tanks (7) angeordnet ist; eine Sonde (11), die an einer Innenseite des Tanks (7) angeordnet ist, um sich im Wesentlichen vertikal in Richtung einer Oberfläche (13) des Produkts (7) und in das Produkt (7) hinein bis zu einem Sondenende (15) zu erstrecken, wobei die Sonde (11) eine Sondenimpedanz aufweist; eine Durchführung (17), die den Sendeempfänger (19) und die Sonde (11) verbindet, wobei die Durchführung (17) eine Durchführungsimpedanz aufweist; und eine Verarbeitungsschaltungsanordnung (21), die an der Außenseite des Tanks (7) angeordnet und mit dem Sendeempfänger (19) gekoppelt ist, umfasst, wobei das Verfahren umfasst:
Senden (100), durch den Sendeempfänger (19), eines elektromagnetischen Sendesignals (S_{T}) durch die Durchführung (17) an die Sonde (11);
Leiten (101), durch die Sonde (11), des Sendesignals (S_{T}) in Richtung des Produkts (5) in dem Tank (7) und in dieses hinein;
Empfangen (102), durch den Sendeempfänger (19), eines elektromagnetischen Reflexionssignals (S_{R}), das sich aus einer Reflexion des Sendesignals (S_{T}) an Impedanzübergängen ergibt, auf die es dabei trifft; und
Bestimmen (103), durch die Verarbeitungsschaltungsanordnung (21), basierend auf einer zeitlichen Beziehung zwischen dem Reflexionssignal (S_{R}) und dem Sendesignal (S_{T}) einer Echodarstellung (51; 63) einer Echosignalstärke als Funktion eines Ausbreitungsparameters, der eine Entfernung von dem Sendeempfänger angibt, wobei die Echodarstellung (51; 63) ein lokales Referenzecho-Extremum (53) aufweist, das eine Reflexion des Sendesignals (S_{T}) an einem Impedanzübergang von der Durchführungsimpedanz zu der Sondenimpedanz angibt, wobei das Verfahren **gekennzeichnet ist durch**:
Schätzen (104), **durch** die Verarbeitungsschaltungsanordnung (21), wenn die Echodarstellung (63) ein lokales Extremum (67) desselben Typs wie das lokale Referenzecho-Extremum (53) innerhalb einer vordefinierten ersten Entfernung (D) von einer Position (69) des lokalen Referenzecho-Extremums (53) in Richtung des Sondenendes (15) aufweist, der Höhe der Oberfläche (13) basierend auf einem Ausbreitungsparameter (71) für das lokale Extremum (67) innerhalb der ersten Entfernung (D) von dem lokalen Referenzecho-Extremum (53); und/oder
Schätzen (104) **durch** die Verarbeitungsschaltungsanordnung (21), wenn die Echodarstellung (63) ein lokales Sondenendenecho-Extremum (55) aufweist, das eine Reflexion des Sendesignals (S_{T}) an dem Sondenende (15) angibt, und die Echodarstellung (63) ein lokales Extremum desselben Typs wie das lokale Sondenendenecho-Extremum (55) innerhalb einer vordefinierten zweiten Entfernung von einer Position des lokalen Sondenendenecho-Extremums (55) in Richtung des Sendeempfängers (19) aufweist, der Höhe der Oberfläche (13) basierend auf einem Ausbreitungsparameter für das lokale Extremum innerhalb der zweiten Entfernung von dem lokalen Sondenendenecho-Extremum (55).

2. Verfahren nach Anspruch 1, wobei das Verfahren umfasst:
Bereitstellen (105), durch die Verarbeitungsschaltungsanordnung (21), wenn die Höhe der Oberfläche (13) basierend auf dem Ausbreitungsparameter (71) für das lokale Extremum (67) innerhalb der ersten Entfernung (D) von dem lokalen Referenzecho-Extremum (53) geschätzt wurde, eines ersten Signals, das angibt, dass sich die Höhe der Oberfläche (13) innerhalb der ersten Entfernung (D) befindet; und/oder
Bereitstellen (105), durch die Verarbeitungsschaltungsanordnung (21), wenn die Höhe der Oberfläche (13) basierend auf dem Ausbreitungsparameter für das lokale Extremum innerhalb der zweiten Entfernung von dem lokalen Sondenendenecho-Extremum (55) geschätzt wurde, eines zweiten Signals, das angibt, dass sich die Höhe der Oberfläche (13) innerhalb der zweiten Entfernung befindet.

3. Verfahren nach Anspruch 2, wobei:
das erste Signal eine Schätzung der Höhe der Oberfläche codiert, wenn sich die Oberfläche innerhalb der ersten Entfernung befindet; und
das zweite Signal eine Schätzung der Höhe der Oberfläche codiert, wenn sich die Oberfläche innerhalb der zweiten Entfernung befindet.

4. Verfahren nach einem der vorhergehenden Ansprüche,
wobei das lokale Referenzecho-Extremum (53) eine erste maximale empfangene Energie angibt, wenn der Echodarstellung innerhalb der ersten Entfernung ein lokales Extremum desselben Typs wie das lokale Referenzecho-Extremum fehlt, und das lokale Sondenenden-Extremum (55) eine zweite maximale empfangene Energie angibt, wenn der Echodarstellung innerhalb der zweiten Entfernung ein lokales Extremum desselben Typs wie das lokale Sondenendenecho-Extremum (55) fehlt; und
wobei das Verfahren umfasst:
Schätzen, durch die Verarbeitungsschaltungsanordnung (21), nur wenn die Echodarstellung ein lokales Extremum (67) desselben Typs wie das lokale Referenzecho-Extremum (53) innerhalb der ersten Entfernung (D) aufweist und das lokale Referenzecho-Extremum (63) eine empfangene Energie angibt, die niedriger ist als die erste maximale empfangene Energie, der Höhe der Oberfläche (13) basierend auf dem Ausbreitungsparameter (71) für das lokale Extremum (67) innerhalb der ersten Entfernung (D) von dem lokalen Referenzecho-Extremum (53); und/oder
Schätzen, durch die Verarbeitungsschaltungsanordnung (21), nur wenn die Echodarstellung (63) ein lokales Extremum desselben Typs wie das lokale Sondenendenecho-Extremum (55) innerhalb der zweiten Entfernung aufweist und das lokale Sondenendenecho-Extremum (55) eine empfangene Energie angibt, die niedriger ist als die zweite maximale empfangene Energie, der Höhe der Oberfläche (13) basierend auf dem Ausbreitungsparameter für das lokale Extremum innerhalb der zweiten Entfernung von dem lokalen Sondenendenecho-Extremum (55).

5. Verfahren nach einem der vorhergehenden Ansprüche, wobei das Verfahren ferner umfasst:
Schätzen, durch die Verarbeitungsschaltungsanordnung (21), wenn ein lokales Echo-Extremum in der Echodarstellung (63) ein vordefiniertes Oberflächenecho-Identifikationskriterium,
einschließlich einer minimalen Echoamplitude, erfüllt, der Höhe der Oberfläche basierend auf einem Ausbreitungsparameter für das lokale Echo-Extremum.

6. Verfahren nach einem der vorhergehenden Ansprüche, wobei:
die erste Entfernung (D) kleiner als 500 mm ist; und
die zweite Entfernung kleiner als 500 mm ist.

7. Radarfüllstandanzeigesystem (1) zum Schätzen eines Füllstands eines Produkts (5) in einem Tank (7), wobei das Radarfüllstandanzeigesystem (1) umfasst:
einen Sendeempfänger (19), der an einer Außenseite des Tanks (7) angeordnet ist, wobei der Sendeempfänger (19) ausgelegt ist, elektromagnetische Signale zu erzeugen, zu senden und zu empfangen;
eine Sonde (11) mit einer Sondenimpedanz, die an einer Innenseite des Tanks (7) angeordnet ist, um sich in Richtung einer Oberfläche (13) des Produkts (5) und in das Produkt (5) hinein bis zu einem Sondenende (15) zu erstrecken, wobei die Sonde (11) ausgelegt ist, ein elektromagnetisches Sendesignal (S_{T}) von dem Sendeempfänger (19) in Richtung des Produkts (5) und in dieses hinein zu leiten und ein elektromagnetisches Reflexionssignal (S_{R}), das sich aus einer Reflexion des Sendesignals (S_{T}) an Impedanzübergängen ergibt, auf die es dabei trifft, zurück zu dem Sendeempfänger (19) zu leiten;
eine Durchführung (17), die den Sendeempfänger (19) und die Sonde (11) verbindet, wobei die Durchführung (17) eine Durchführungsimpedanz aufweist; und
eine Verarbeitungsschaltung (21), die an der Außenseite des Tanks (7) angeordnet und mit dem Sendeempfänger (19) gekoppelt ist, wobei die Verarbeitungsschaltungsanordnung (21) ferner ausgelegt ist, basierend auf einer zeitlichen Beziehung zwischen dem Reflexionssignal (S_{R}) und dem Sendesignal (S_{T}) eine Echodarstellung (51; 63) einer Echosignalstärke als Funktion eines Ausbreitungsparameters, der eine Entfernung von dem Sendeempfänger (19) angibt, zu bestimmen, wobei die Echodarstellung (51; 63) ein lokales Referenzecho-Extremum (53) aufweist, das eine Reflexion des Sendesignals (S_{T}) an einem Impedanzübergang von der Durchführungsimpedanz zu der Sondenimpedanz angibt, **dadurch gekennzeichnet, dass** die Verarbeitungsschaltungsanordnung (21) ferner ausgelegt ist zum:
Schätzen, wenn die Echodarstellung (63) ein lokales Extremum (67) desselben Typs wie das lokale Referenzecho-Extremum (53) innerhalb einer vordefinierten ersten Entfernung (D) von einer Position (69) des lokalen Referenzecho-Extremums (53) in Richtung des Sondenendes (15) aufweist, der Höhe der Oberfläche (13) basierend auf einem Ausbreitungsparameter (71) für das lokale Extremum (67) innerhalb der ersten Entfernung (D) von dem lokalen Referenzecho-Extremum (53); und/oder
Schätzen, wenn die Echodarstellung (63) ein lokales Sondenendenecho-Extremum (55) aufweist, das eine Reflexion des Sendesignals (S_{T}) an dem Sondenende (15) angibt, und die Echodarstellung (63) ein lokales Extremum desselben Typs wie das lokale Sondenendenecho-Extremum (55) innerhalb einer vordefinierten zweiten Entfernung von einer Position des lokalen Sondenendenecho-Extremums in Richtung des Sendeempfängers (19) aufweist, der Höhe der Oberfläche basierend auf einem Ausbreitungsparameter für das lokale Extremum innerhalb der zweiten Entfernung von dem lokalen Sondenendenecho-Extremum (55).

8. Radarfüllstandanzeigesystem (1) nach Anspruch 7, wobei die Verarbeitungsschaltungsanordnung (21) ausgelegt ist zum:
Bereitstellen, wenn die Höhe der Oberfläche basierend auf dem Ausbreitungsparameter (71) für das lokale Extremum (67) innerhalb der ersten Entfernung von dem lokalen Referenzecho-Extremum (53) geschätzt wurde, eines ersten Signals, das angibt, dass sich die Höhe der Oberfläche (13) innerhalb der ersten Entfernung (D) befindet; und/oder
Bereitstellen, wenn die Höhe der Oberfläche basierend auf dem Ausbreitungsparameter für das lokale Extremum innerhalb der zweiten Entfernung von dem lokalen Sondenendenecho-Extremum geschätzt wurde, eines zweiten Signals, das angibt, dass sich die Höhe der Oberfläche innerhalb der zweiten Entfernung befindet.

9. Radarfüllstandanzeigesystem (1) nach Anspruch 7 oder 8, wobei die Verarbeitungsschaltungsanordnung (21) ausgelegt ist zum:
Bilden des ersten Signals in einer derartigen Weise, dass das erste Signal die Höhe der Oberfläche codiert, wenn sich die Oberfläche innerhalb der ersten Entfernung befindet; und
Bilden des zweiten Signals in einer derartigen Weise, dass das zweite Signal die Höhe der Oberfläche codiert, wenn sich die Oberfläche innerhalb der zweiten Entfernung befindet.

10. Radarfüllstandanzeigesystem (1) nach einem der Ansprüche 7 bis 9,
wobei das lokale Referenzecho-Extremum (53) eine erste maximale empfangene Energie angibt, wenn der Echodarstellung innerhalb der ersten Entfernung ein lokales Extremum desselben Typs wie das lokale Referenzecho-Extremum fehlt, und das lokale Sondenenden-Extremum (55) eine zweite maximale empfangene Energie angibt, wenn der Echodarstellung innerhalb der zweiten Entfernung ein lokales Extremum desselben Typs wie das lokale Sondenendenecho-Extremum fehlt; und
wobei die Verarbeitungsschaltungsanordnung (21) ausgelegt ist zum:
Schätzen, nur wenn die Echodarstellung (63) ein lokales Extremum desselben Typs wie das lokale Referenzecho-Extremum innerhalb der ersten Entfernung aufweist und das lokale Referenzecho-Extremum eine empfangene Energie angibt, die niedriger ist als die erste maximale empfangene Energie, der Höhe der Oberfläche basierend auf dem Ausbreitungsparameter für das lokale Extremum innerhalb der ersten Entfernung von dem lokalen Referenzecho-Extremum; und/oder
Schätzen, nur wenn die Echodarstellung (63) ein lokales Extremum desselben Typs wie das lokale Sondenendenecho-Extremum innerhalb der zweiten Entfernung aufweist und das lokale Sondenendenecho-Extremum eine empfangene Energie angibt, die niedriger ist als die zweite maximale empfangene Energie, der Höhe der Oberfläche basierend auf dem Ausbreitungsparameter für das lokale Extremum innerhalb der zweiten Entfernung von dem lokalen Sondenendenecho-Extremum.

11. Radarfüllstandanzeigesystem (1) nach einem der Ansprüche 7 bis 10, wobei die Verarbeitungsschaltungsanordnung (21) ausgelegt ist zum:
Schätzen, wenn ein lokales Echo-Extremum in der Echodarstellung ein vordefiniertes Oberflächenecho-Identifikationskriterium, einschließlich einer minimalen Echoamplitude, erfüllt, der Höhe der Oberfläche basierend auf einem Ausbreitungsparameter für das lokale Echo-Extremum.

12. Radarfüllstandanzeigesystem (1) nach einem der Ansprüche 7 bis 11, wobei:
die erste Entfernung kleiner als 500 mm ist; und
die zweite Entfernung kleiner als 500 mm ist.

13. Radarfüllstandanzeigesystem (1) nach einem der Ansprüche 7 bis 12, wobei die Sonde eine Einzelleitersonde ist.

## Revendications

1. Procédé d'estimation d'un niveau d'un produit (5) dans un réservoir (7), à l'aide d'un système de jauge de niveau à radar (1) comprenant un émetteur-récepteur (19) agencé sur un côté extérieur du réservoir (7) ; une sonde (11) agencée sur un côté intérieur du réservoir (7) de manière à s'étendre substantiellement verticalement vers une surface (13) du produit (7) et dans le produit (7) vers une extrémité de sonde (15), la sonde (11) présentant une impédance de sonde ; une traversée (17) reliant l'émetteur-récepteur (19) et la sonde (11), la traversée (17) présentant une impédance de traversée ; et un circuit de traitement (21) agencé sur le côté extérieur du réservoir (7) et couplé à l'émetteur-récepteur (19), le procédé comprenant :
l'émission (100), par l'émetteur-récepteur (19), d'un signal d'émission électromagnétique (S_{T}) par le biais de la traversée (17) vers la sonde (11) ;
le guidage (101), par la sonde (11), du signal d'émission (S_{T}) vers et dans le produit (5) dans le réservoir (7) ;
la réception (102), par l'émetteur-récepteur (19), d'un signal de réflexion électromagnétique (S_{R}) résultant de la réflexion du signal d'émission (S_{T}) à des transitions d'impédance rencontrées par celui-ci ; et
la détermination (103), par le circuit de traitement (21), sur la base d'une relation de synchronisation entre le signal de réflexion (S_{R}) et le signal d'émission (S_{T}), d'une représentation d'écho (51 ; 63) de la force de signal d'écho en fonction d'un paramètre de propagation indiquant la distance par rapport à l'émetteur-récepteur, la représentation d'écho (51 ; 63) incluant un extremum local d'écho de référence (53) indiquant la réflexion du signal d'émission (S_{T}) à une transition d'impédance entre l'impédance de traversée et l'impédance de sonde, le procédé étant **caractérisé par** :
l'estimation (104), par le circuit de traitement (21), lorsque la représentation d'écho (63) présente un extremum local (67) du même type que l'extremum local d'écho de référence (53) à une première distance prédéfinie (D) depuis une position (69) de l'extremum local d'écho de référence (53) vers l'extrémité de sonde (15), du niveau de la surface (13) sur la base d'un paramètre de propagation (71) pour l'extremum local (67) à la première distance (D) par rapport à l'extremum local d'écho de référence (53) ; et/ou
l'estimation (104), par le circuit de traitement (21), lorsque la représentation d'écho (63) inclut un extremum local d'écho d'extrémité de sonde (55) indiquant la réflexion du signal d'émission (S_{T}) au niveau de l'extrémité de sonde (15) et que la représentation d'écho (63) présente un extremum local du même type que l'extremum local d'écho d'extrémité de sonde (55) à une deuxième distance prédéfinie depuis une position de l'extremum local d'écho d'extrémité de sonde (55) vers l'émetteur-récepteur (19), du niveau de la surface (13) sur la base d'un paramètre de propagation pour l'extremum local à la deuxième distance par rapport à l'extremum local d'écho d'extrémité de sonde (55).

2. Procédé selon la revendication 1, dans lequel le procédé comprend :
la fourniture (105), par le circuit de traitement (21), lorsque le niveau de la surface (13) a été estimé sur la base du paramètre de propagation (71) pour l'extremum local (67) à la première distance (D) par rapport à l'extremum local d'écho de référence (53), d'un premier signal indiquant que le niveau de la surface (13) se trouve à la première distance (D) ; et/ou
la fourniture (105), par le circuit de traitement (21), lorsque le niveau de la surface (13) a été estimé sur la base du paramètre de propagation pour l'extremum local à la deuxième distance par rapport à l'extremum local d'écho d'extrémité de sonde (55), d'un deuxième signal indiquant que le niveau de la surface (13) se trouve à la deuxième distance.

3. Procédé selon la revendication 2, dans lequel :
le premier signal code une estimation du niveau de la surface lorsque la surface se trouve à la première distance ; et
le deuxième signal code une estimation du niveau de la surface lorsque la surface se trouve à la deuxième distance.

4. Procédé selon l'une quelconque des revendications précédentes,
dans lequel l'extremum local d'écho de référence (53) indique une première énergie reçue maximale lorsque la représentation d'écho ne présente pas d'extremum local du même type que l'extremum local d'écho de référence à la première distance, et l'extremum local d'écho d'extrémité de sonde (55) indique une deuxième énergie reçue maximale lorsque la représentation d'écho ne présente pas d'extremum local du même type que l'extremum local d'écho d'extrémité de sonde (55) à la deuxième distance ; et
dans lequel le procédé comprend :
l'estimation, par le circuit de traitement (21), uniquement lorsque la représentation d'écho présente un extremum local (67) du même type que l'extremum local d'écho de référence (53) à la première distance (D) et que l'extremum local d'écho de référence (63) indique une énergie reçue inférieure à la première énergie reçue maximale, du niveau de la surface (13) sur la base du paramètre de propagation (71) pour l'extremum local (67) à la première distance (D) par rapport à l'extremum local d'écho de référence (53) ; et/ou
l'estimation, par le circuit de traitement (21), uniquement lorsque la représentation d'écho (63) présente un extremum local du même type que l'extremum local d'écho d'extrémité de sonde (55) à la deuxième distance et que l'extremum local d'écho d'extrémité de sonde (55) indique une énergie reçue inférieure à la deuxième énergie reçue maximale, du niveau de la surface (13) sur la base du paramètre de propagation pour l'extremum local à la deuxième distance par rapport à l'extremum local d'écho d'extrémité de sonde (55).

5. Procédé selon l'une quelconque des revendications précédentes, dans lequel le procédé comprend :
l'estimation, par le circuit de traitement (21), lorsqu'un extremum local d'écho dans la représentation d'écho (63) remplit un critère d'identification d'écho de surface prédéfini incluant une amplitude d'écho minimale, du niveau de la surface sur la base d'un paramètre de propagation pour l'extremum local d'écho.

6. Procédé selon l'une quelconque des revendications précédentes, dans lequel :
la première distance (D) est inférieure à 500 mm ; et
la deuxième distance est inférieure à 500 mm.

7. Système de jauge de niveau à radar (1) destiné à estimer un niveau d'un produit (5) dans un réservoir (7), le système de jauge de niveau à radar (1) comprenant :
un émetteur-récepteur (19) agencé sur un côté extérieur du réservoir (7), l'émetteur-récepteur (19) étant configuré pour générer, émettre et recevoir des signaux électromagnétiques ;
une sonde (11) présentant une impédance de sonde, agencée sur un côté intérieur du réservoir (7) pour s'étendre substantiellement verticalement vers une surface (13) du produit (5) et dans le produit (5) vers une extrémité de sonde (15), la sonde (11) étant configurée pour guider un signal d'émission électromagnétique (S_{T}) à partir de l'émetteur-récepteur (19) vers et dans le produit (5), et pour guider un signal de réflexion électromagnétique (S_{R}) résultant de la réflexion du signal d'émission (S_{T}) à des transitions d'impédance rencontrées par celui-ci vers l'émetteur-récepteur (19) ;
une traversée (17) reliant l'émetteur-récepteur (19) et la sonde (11), la traversée (17) présentant une impédance de traversée ; et
un circuit de traitement (21) agencé sur le côté extérieur du réservoir (7) et couplé à l'émetteur-récepteur (19), le circuit de traitement (21) étant configuré pour déterminer, sur la base d'une relation de synchronisation entre le signal de réflexion (S_{R}) et le signal d'émission (S_{T}), une représentation d'écho (51 ; 63) de la force de signal d'écho en fonction d'un paramètre de propagation indiquant la distance par rapport à l'émetteur-récepteur (19), la représentation d'écho (51 ; 63) incluant un extremum local d'écho de référence (53) indiquant la réflexion du signal d'émission (S_{T}) à une transition d'impédance entre l'impédance de traversée et l'impédance de sonde, **caractérisé en ce que** le circuit de traitement (21) est en outre configuré pour :
estimer, lorsque la représentation d'écho (63) présente un extremum local (67) du même type que l'extremum local d'écho de référence (53) à une première distance prédéfinie (D) depuis une position (69) de l'extremum local d'écho de référence (53) vers l'extrémité de sonde (15), le niveau de la surface (13) sur la base d'un paramètre de propagation (71) pour l'extremum local (67) à la première distance (D) par rapport à l'extremum local d'écho de référence (53) ; et/ou
estimer, lorsque la représentation d'écho (63) inclut un extremum local d'écho d'extrémité de sonde (55) indiquant la réflexion du signal d'émission (S_{T}) au niveau de l'extrémité de sonde (15) et que la représentation d'écho (63) présente un extremum local du même type que l'extremum local d'écho d'extrémité de sonde (55) à une deuxième distance prédéfinie depuis une position de l'extremum local d'écho d'extrémité de sonde vers l'émetteur-récepteur (19), le niveau de la surface sur la base d'un paramètre de propagation pour l'extremum local à la deuxième distance par rapport à l'extremum local d'écho d'extrémité de sonde (55).

8. Système de jauge de niveau à radar (1) selon la revendication 7, dans lequel le circuit de traitement (21) est configuré pour :
fournir, lorsque le niveau de la surface a été estimé sur la base du paramètre de propagation (71) pour l'extremum local (67) à la première distance par rapport à l'extremum local d'écho de référence (53), un premier signal indiquant que le niveau de la surface (13) se trouve à la première distance (D) ; et/ou
fournir, lorsque le niveau de la surface a été estimé sur la base du paramètre de propagation pour l'extremum local à la deuxième distance par rapport à l'extremum local d'écho d'extrémité de sonde, un deuxième signal indiquant que le niveau de la surface se trouve à la deuxième distance.

9. Système de jauge de niveau à radar (1) selon la revendication 7 ou 8, dans lequel le circuit de traitement (21) est configuré pour :
former le premier signal de telle façon que le premier signal code le niveau de la surface lorsque la surface se trouve à la première distance ; et
former le deuxième signal de telle façon que le deuxième signal code le niveau de la surface lorsque la surface se trouve à la deuxième distance.

10. Système de jauge de niveau à radar (1) selon l'une quelconque des revendications 7 à 9,
dans lequel l'extremum local d'écho de référence (53) indique une première énergie reçue maximale lorsque la représentation d'écho ne présente pas d'extremum local du même type que l'extremum local d'écho de référence à la première distance, et l'extremum local d'écho d'extrémité de sonde (55) indique une deuxième énergie reçue maximale lorsque la représentation d'écho ne présente pas d'extremum local du même type que l'extremum local d'écho d'extrémité de sonde à la deuxième distance ; et
dans lequel le circuit de traitement (21) est configuré pour :
estimer, uniquement lorsque la représentation d'écho (63) présente un extremum local du même type que l'extremum local d'écho de référence à la première distance et que l'extremum local d'écho de référence indique une énergie reçue inférieure à la première énergie reçue maximale, le niveau de la surface sur la base du paramètre de propagation pour l'extremum local à la première distance par rapport à l'extremum local d'écho de référence ; et/ou
estimer, uniquement lorsque la représentation d'écho (63) présente un extremum local du même type que l'extremum local d'écho d'extrémité de sonde à la deuxième distance et que l'extremum local d'écho d'extrémité de sonde indique une énergie reçue inférieure à la deuxième énergie reçue maximale, le niveau de la surface sur la base du paramètre de propagation pour l'extremum local à la deuxième distance par rapport à l'extremum local d'écho d'extrémité de sonde.

11. Système de jauge de niveau à radar (1) selon l'une quelconque des revendications 7 à 10, dans lequel le circuit de traitement (21) est configuré pour :
estimer, lorsqu'un extremum local d'écho dans la représentation d'écho remplit un critère d'identification d'écho de surface prédéfini incluant une amplitude d'écho minimale, le niveau de la surface sur la base d'un paramètre de propagation pour l'extremum local d'écho.

12. Système de jauge de niveau à radar (1) selon l'une quelconque des revendications 7 à 11, dans lequel :
la première distance est inférieure à 500 mm ; et
la deuxième distance est inférieure à 500 mm.

13. Système de jauge de niveau à radar (1) selon l'une quelconque des revendications 7 à 12, dans lequel la sonde est une sonde à un seul conducteur.
